# EUROPÄISCHE PATENTSCHRIFT

(11) **EP 4 233 517 B1**
(45) Veröffentlichungstag und Bekanntmachung des Hinweises auf die Patenterteilung: **04.03.2026**
(21) Anmeldenummer: 23153947.9
(22) Anmeldetag: 30.01.2023
(51) Int. Cl.: A01D 43/08, A01D 34/73

(54) **SCHNEIDSCHEIBE FÜR EINE MASCHINE ZUR ERNTE STÄNGELARTIGER PFLANZEN**
CUTTING DISC FOR A MACHINE FOR HARVESTING STALK-LIKE PLANTS
DISQUE DE COUPE POUR UNE MACHINE DE RÉCOLTE DE PLANTES À TIGES

(30) Priorität: 24.02.2022 DE 102022104463
(43) Veröffentlichungstag der Anmeldung: 30.08.2023
(73) Patentinhaber: Deere & Company, Moline, IL 61265 (US)
(72) Erfinder: PATIL, AKSHAY, 68163 Mannheim (DE); ARALEKAR, SUNIL, 68163 Mannheim (DE); SCHILD, JAN-DIRK, 68163 Mannheim (DE); Joshi, Vinod, 68163 Mannheim (DE)
(74) Vertreter: Holst, Sönke

(56) Entgegenhaltungen:
- EP-A1- 3 949 715
- EP-A2- 1 483 955
- DE-A1- 102006 051 619
- DE-B3- 102007 038 274
- DE-C1- 19 952 566
- US-A1- 2018 326 516

## Beschreibung

Die Erfindung betrifft eine Schneidscheibe für eine Maschine zur Ernte stängelartiger Pflanzen, umfassend eine Anzahl an Elementen, die gemeinsam einen Kreisring mit einer äußeren Schneidkante bildend an einer Halterung anbringbar oder angebracht sind, sowie eine damit ausgestattete Maschine zur Ernte stängelartiger Pflanzen.

### Stand der Technik

In der DE 195 31 918 A wird eine für die Ernte von stängelartigen Pflanzen, wie Mais, geeignete Maschine zur Anbringung an einem Feldhäcksler beschrieben, die mehrere Mäh-und Einzugseinrichtungen aufweist. Die Mäh- und Einzugseinrichtungen umfassen eine untere Schneidscheibe in der Art eines Kreissägemessers und darüber angeordnete Förderscheiben mit Aussparungen zur Aufnahme von Pflanzen. Die Schneidscheiben werden mit höherer Geschwindigkeit als die Förderscheiben in Drehung versetzt. Die mittels der Schneidscheiben von den im Boden verbleibenden Stoppeln getrennten Pflanzen werden durch die Förderscheiben angenommen und durch die Förderscheiben und in den Zwickelbereichen zwischen den Förderscheiben angeordnete Querfördertrommeln an den Rückseiten der Mäh-und Einzugseinrichtungen zur Mitte der Maschine transportiert und durch Schrägfördertrommeln an einen Einzugskanal eines Feldhäckslers übergeben.

Die Schneidscheiben sind bei derartigen Maschinen aus n Segmenten zusammengesetzt, die jeweils 1/n eines Kreisrings definieren und sich um den Umfang einer ihnen zugeordneten, mit dem Rahmen der Maschine drehbar verbundenen Halterung erstrecken und daran mit Schrauben befestigt sind. Der äußere Umfang der Segmente ist mit Zähnen ausgestattet, deren schneidenden Kanten angeschliffen sind. DE 195 52 566 A1 offenbart eine segmentierte Schneidscheibe für eine Erntemaschine

Andere bekannte Maschinen zur Ernte von stängelartigen Pflanzen umfassen feststehende Schneidscheiben, an denen die Pflanzen durch die Förderscheiben entlang bewegt werden (DE 10 2007 038 274 B3) oder Kettenförderer mit darunter angeordneten, stationären Schneidscheiben (DE 101 16 675 A) oder rotierenden Schneidscheiben (DE 199 51 459 A). Bei den Schneidscheiben handelt es sich, trotz einer den Verschleiß mindernden, harten Beschichtung um Verschleißteile, die regelmäßig auszutauschen sind. Da die verschlissenen Schneidscheiben unbrauchbar sind, sind rechtzeitig Ersatzteile zu bestellen oder zu bevorraten (oder für den Fall einer unerwarteten Beschädigung an Bord des Feldhäcksler mitzuführen) und es ist relativ viel, an sich aber unbeschädigtes Material zu entsorgen. Ein Ansatz zur Verminderung dieses Problems findet sich in der DE 10 2006 051 619 A1, wo vorgeschlagen wird, die Zähne mit Sollbruchstellen zu versehen, an denen äußere Abschnitte der Zähne abtrennbar sind, sodass nach dem Abtrennen der äußeren Abschnitte nunmehr kürzere Zähne mit neuen, scharfen Schneidkanten verbleiben. Diese Anordnung leidet, da die äußeren Zähne bei höherer Belastung abbrechen können, unter gewissen Nachteilen.

### Aufgabe

Die der Erfindung zu Grunde liegende Aufgabe wird darin gesehen, eine Schneidscheibe für eine Maschine zur Ernte stängelartiger Pflanzen mit Mäh- und Einzugseinrichtungen bereitzustellen, die eine längere Nutzungszeit als bisherige Schneidscheiben ermöglicht.

### Erfindung

Diese Aufgabe wird erfindungsgemäß durch die Lehre der Patentansprüche 1 und 7 gelöst, wobei in den weiteren Patentansprüchen Merkmale aufgeführt sind, die die Lösung in vorteilhafter Weise weiterentwickeln.

Eine Schneidscheibe für eine Maschine zur Ernte stängelartiger Pflanzen umfasst eine Anzahl an Elementen, die gemeinsam einen Kreisring mit einer äußeren Schneidkante bildend an einer Halterung anbringbar oder angebracht sind. Wenigstens eines, mehrere oder alle der Elemente ist oder sind in einer ersten Position, in der ein erster Rand des Elements die äußere Schneidkante bildet, und in einer zweiten Position, in der ein zweiter Rand des Elements die äußere Schneidkante bildet, an der Halterung anbringbar.

Es sind zwei unterschiedliche Arten von Elementen alternierend an der Halterung anbringbar. Hierbei weist eine erste Art von Elementen eine kleinere radiale Abmessung als eine zweite Art von Elementen auf und ist zumindest teilweise in einer Einbuchtung des Elements der zweiten Art angeordnet. Die äußeren Abmessungen der ersten Art von Elementen in Umfangsrichtung (am Umfang der Schneidscheibe gemessen) können kleiner als jene der zweiten Art von Elementen sein.

Mit anderen Worten ist wenigstens eines der Elemente nicht nur in einer einzigen Position an der Halterung anbringbar, in der sein erster Rand den dortigen Teil der äußeren Schneidkante bildet, sondern auch in einer zweiten Position an der Halterung anbringbar, in der ein zweiter Rand des Elements den dortigen Teil der äußeren Schneidkante bildet. Das nach Verschleiß des ersten Randes in die zweite Position umsetzbare Element hat somit zwei Ränder, die jeweils eine Schneidkante bilden und kann länger als die bisherigen Elemente verwendet werden, die nur einen einzigen schneidenden Rand aufweisen. Unabhängig davon, ob das besagte Element in der ersten oder zweiten Position ist, wird ein Kreisring mit einer äußeren Schneidkante gebildet.

Die Schneidkante der Elemente kann in an sich bekannter Weise durch Zähne gebildet werden, die insbesondere angeschliffen und ggf. gehärtet oder mit einer harten Beschichtung versehen sind.

Das oder die umsetzbaren Elemente können um eine Symmetrielinie um 180° zwischen der ersten und zweiten Position drehbar sein. Die Symmetrielinie kann parallel zum mit der Schneidkante versehenen Rand des Elements und optional senkrecht dazu verlaufen.

Die Elemente können in sich flach oder in sich abgewinkelt sein, insbesondere entlang der parallel zum mit der Schneidkante versehenen Rand des Elements verlaufenden Symmetrielinie.

Eine Maschine zur Ernte stängelartiger Pflanzen kann eine oder mehrere Mäh- und Einzugseinrichtungen aufweisen, die jeweils eine feststehende (in diesem Fall reicht es aus, wenn die Schneidscheibe einen Halbkreis bildet, vgl. DE 10 2007 038 274 B3) oder rotativ angetriebene, untere Schneidscheibe der beschriebenen Art und darüber angeordnete Förderelemente mit Aussparungen zur Aufnahme von Pflanzen umfasst.

### Ausführungsbeispiel

In den Zeichnungen sind zwei ein nachfolgend näher beschriebene Ausführungsbeispiele der Erfindung dargestellt. Es zeigt:
- Fig. 1: eine Draufsicht eine Maschine zur Ernte stängelartiger Pflanzen,
- Fig. 2: einen Schnitt durch die Maschine entlang der Linie 2-2,
- Fig. 3: eine Draufsicht auf eine Schneidscheibe nach dem Stand der Technik,
- Fig. 4: eine perspektivische Ansicht einer ersten Ausführungsform einer Schneidscheibe von unten,
- Fig. 5: eine Ansicht eines ersten Elements der Schneidscheibe von einer ersten Seite,
- Fig. 6: eine Ansicht des Elements nach Figur 5 von einer zweiten Seite,
- Fig. 7: eine perspektivische Ansicht des Elements nach Figur 5 und 6,
- Fig. 8: eine Ansicht eines zweiten Elements der Schneidscheibe von einer ersten Seite,
- Fig. 9: eine Ansicht des Elements nach Figur 8 von einer zweiten Seite,
- Fig. 10: eine perspektivische Ansicht des Elements nach Figur 8 und 9,
- Fig. 11: eine perspektivische Ansicht einer zweiten Ausführungsform einer Schneidscheibe von unten, und
- Fig. 12: eine perspektivische Ansicht einer zweiten Ausführungsform eines zweiten Elements.

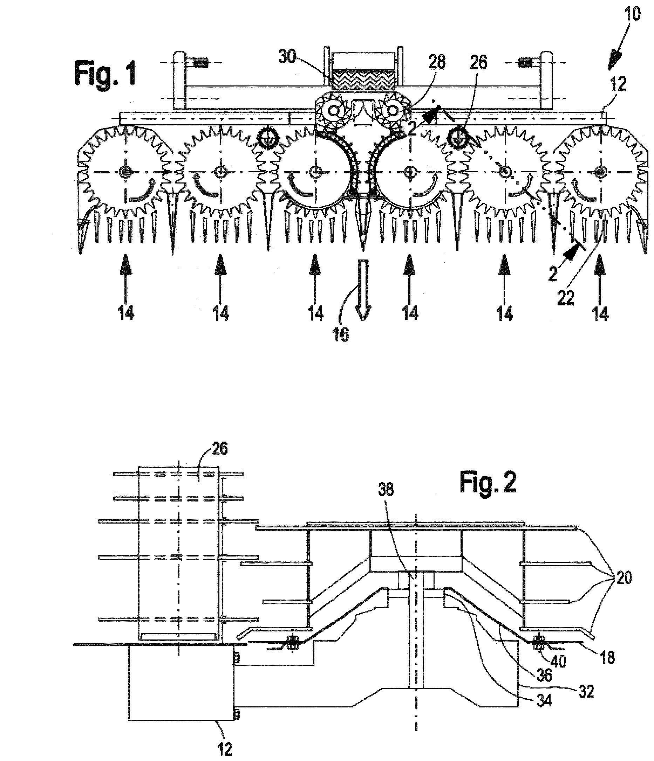

An einem Rahmen 12 einer in der Figur 1 in einer Draufsicht dargestellten Maschine 10 zur Ernte stängelartiger Pflanzen sind beidseits einer Längsmittelebene 16 jeweils vier Mäh- und Einzugseinrichtungen 14 seitlich nebeneinander befestigt. Die Mäh- und Einzugseinrichtungen 14 setzen sich jeweils aus einer unteren, in Drehung versetzbaren Schneidscheibe 18 (s. Figur 2) und mehreren koaxial darüber angeordneten, in Drehung versetzbaren Förderelementen 20 zusammen. Die Schneidscheiben 18 sind am Rand mit scharfen Zähnen ausgestattet oder anderweitig geschärft, um die Pflanzenstängel von den im Boden verbleibenden Stoppeln abzutrennen. Die Stängel finden in Ausbuchtungen 22 der Förderelemente 20 Aufnahme und werden an der Rückseite der Mäh- und Einzugseinrichtungen 14 durch rückwärtige Querfördertrommeln 26 übernommen, welche die Pflanzen im Zusammenwirken mit den Rückseiten der Mäh- und Einzugseinrichtungen 14 zu Mitte der Maschine 10 fördern, wo sie durch Abgabefördertrommeln 28 an die Einzugswalzen 30 eines die Maschine 10 tragenden und ihre beweglichen Elemente antreibenden und die Maschine 10 in einer Vorwärtsrichtung V über ein Feld bewegenden Feldhäcksler (nicht gezeigt) übergeben werden. Im Folgenden beziehen sich Richtungsangaben, wie vorn und hinten, auf die Vorwärtsrichtung V.

Die Figur 2 zeigt einen Schnitt durch die Maschine 10 entlang der Linie 2-2 der Figur 1. Ein Teile des Antriebsstrangs für die Förderelemente 20 und Schneidscheiben 18 der Einzugs- und Mäheinrichtung 14 enthaltendes Getriebegehäuse 32 ist mit dem Rahmen 12 verschraubt. Das Getriebegehäuse 32 umfasst eine sich nach oben erstreckende Hohlwelle 34, die zum Antrieb einer nach unten ausgewölbten Halterung 36 dient, an deren Umfang die Schneidscheibe 18 durch Schrauben 40 befestigt ist. Durch die Hohlwelle 34 erstreckt sich eine Welle 38 zum Antrieb der Förderelemente 20.

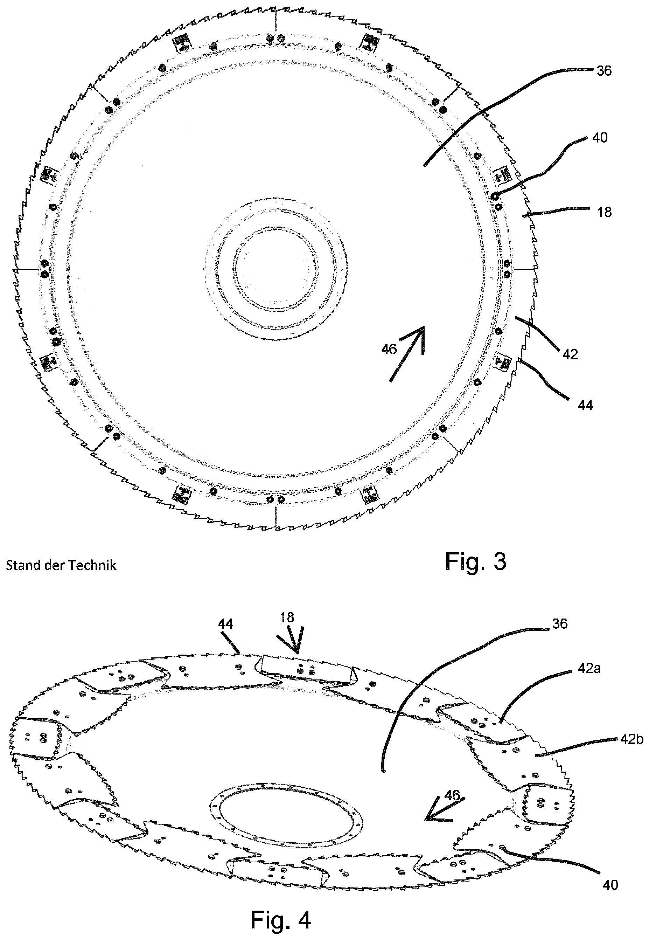

Die Figur 3 zeigt eine Ansicht einer Schneidscheibe 18 nach dem Stand der Technik von oben gemeinsam mit der Halterung 36. Um den Umfang der Halterung 36 sind insgesamt acht, in sich flache und untereinander identische Elemente 42 verteilt, die jeweils ein Achtel eines Kreisrings bilden. Die Elemente 42 umfassen jeweils eine Anzahl an Öffnungen für die Schrauben 40 und an ihrem äußeren Umfang eine Reihe an Zähnen 44, die äußere Schneidkanten umfassen, die sich in einem in Drehrichtung 46 nach innen gerichtetem Winkel erstrecken. Die Schneidkanten sind relativ scharf und die Zähne 44 sind vorzugsweise mit einer harten Beschichtung (z. B. aus Wolframkarbid) versehen. Da die Zähne 44 nur außen angeordnet sind, müssen die Elemente 42 ausgetauscht werden, wenn die Schneidkanten stumpf sind.

Die Figuren 4 bis 10 zeigen eine erste Ausführungsform einer erfindungsgemäßen Schneidscheibe 18, die zwei unterschiedliche Arten von Elementen 42a, 42b umfasst, die sich in Umfangsrichtung untereinander abwechselnd angeordnet sind und insgesamt die kreisringförmige Schneidscheibe 18 bilden. Insgesamt sind acht erste Elemente 42a und acht zweite Elemente 42b vorhanden und durch Schrauben 40 mit der Halterung 36 verbunden, obwohl auch größere und kleinere Anzahlen an Elementen 42a, 42b vorgesehen sein könnten. Bei einer feststehenden Schneidscheibe 18 würde auch ein Halbkreis ausreichen.

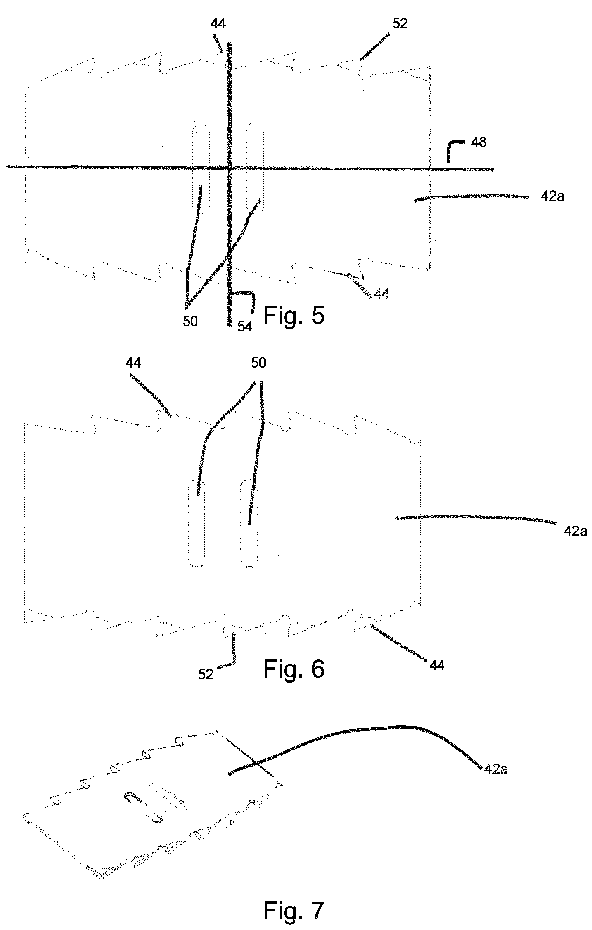

Die Figuren 5 bis 7 zeigen ein erstes Element 42a von oben, unten und in einer perspektivischen Ansicht. Das erste Element 42a ist gegenüber einer Symmetrielinie 48 symmetrisch aufgebaut und umfasst zwei Reihen von Zähnen 44, die an zwei Rändem des Elements 42a angebracht sind, die sich beidseits der Symmetrielinie 48 befinden. Die Symmetrielinie 48 erstreckt sich, wenn das erste Element 42a an der Halterung 36 angebracht ist, entlang der Drehrichtung 46. Die Zähne 44 erstrecken sich in der Richtung der Symmetrielinie 48, sind jedoch auf einem Kreisbogen angeordnet, damit letztlich die Kreisform der Schneidscheibe 18 erzielt werden kann.

In der dargestellten Ausführungsform sind angeschliffene Flächen 52 der Zähne 44 auf einer Seite der Symmetrielinie 48 an einer ersten Fläche des ersten Elements 42a (in Figur 5 oben und in Figur 6 unten gezeigt) und an der jeweils anderen Seite der Symmetrielinie 48 an einer zweiten Fläche des ersten Elements 42a (in Figur 5 unten und in Figur 6 oben gezeigt) angeordnet, während die Richtungen der Zähne 44 auf beiden Seiten der Symmetrielinie 48 gleich ist (in Figur 5 mit den durch die angeschliffenen Flächen 52 gebildeten Schneidkanten nach links). Wenn man das erste Element 42a demnach um 180° um die Symmetrielinie 48 dreht, bleibt die gezeigte Konfiguration (Richtung der Zähne 44 und Lage der angeschliffenen Flächen 52) somit erhalten. Dadurch können die ersten Elemente 42a auch, wenn die Zähne 44 auf einer Seite der Symmetrielinie 48 verschlissen sind, abgebaut, um 180° gedreht um die Symmetrielinie 48 gedreht und wieder montiert werden. Dadurch verdoppelt man die Standzeit der ersten Elemente 42a. Langlöcher 50 dienen zur Aufnahme der Schrauben 40 und ermöglichen eine gewisse Verschiebung der ersten Elemente 42a in radialer Richtung der Schneidscheibe 18.

Es sei noch angemerkt, dass man die Zähne 44 alternativ symmetrisch zu einer zweiten (in Figur 5 vertikal eingezeichneten) Symmetrielinie 54 des ersten Elements 42a anordnen könnte. Dann wären die angeschliffenen Flächen 52 an einer einzigen Fläche des ersten Elements 42a angeordnet (wären somit nur in Figur 5, nicht in Figur 6 zu sehen - oder umgekehrt) und die Richtungen der Zähne 44 beidseits der Symmetrielinie 48 unterschiedlich. Das erste Element 42a wäre dann, wenn die Zähne 44 an einem Rand des ersten Elements 42a verschlissen sind, abzubauen, um beide Symmetrielinien 48 und 54 jeweils um 180° umzudrehen und dann wieder zu montieren.

Anhand der Figur 7 ist erkennbar, dass das erste Element 42a im Bereich der Zähne 44 auf der Seite mit den angeschliffenen Flächen 52 eine größere Materialstärke als im Bereich dazwischen aufweisen kann.

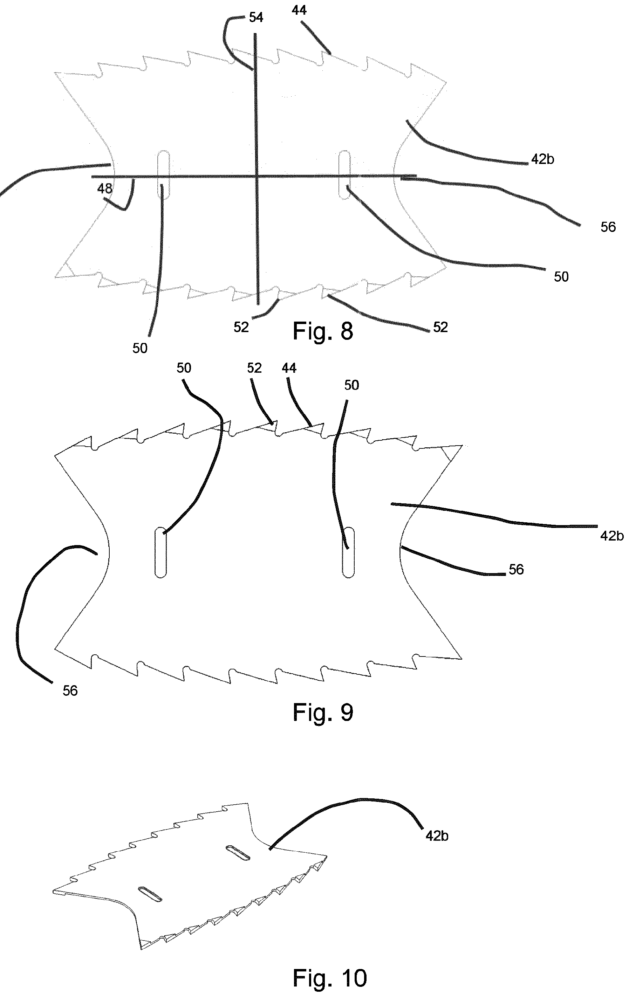

Die Figuren 8 bis 10 zeigen ein zweites Element 42b von oben, unten und in einer perspektivischen Ansicht. Das zweite Element 42b ist gegenüber einer Symmetrielinie 48 symmetrisch aufgebaut und umfasst zwei Reihen von Zähnen 44, die an zwei Rändern des Elements 42ab angebracht sind, die sich beidseits der Symmetrielinie 48 befinden. Die Symmetrielinie 48 erstreckt sich, wenn das zweite Element 42b an der Halterung 36 angebracht ist, entlang der Drehrichtung 46. Die Zähne 44 erstrecken sich in der Richtung der Symmetrielinie 48, sind jedoch auf einem Kreisbogen angeordnet, damit letztlich die Kreisform der Schneidscheibe 18 erzielt werden kann.

In der dargestellten Ausführungsform sind angeschliffene Flächen 52 der Zähne 44 auf einer Seite der Symmetrielinie 48 an einer ersten Fläche des zweiten Elements 42b (in Figur 8 oben und in Figur 9 unten gezeigt) und an der jeweils anderen Seite der Symmetrielinie 48 an einer zweiten Fläche des zweiten Elements 42b (in Figur 8 unten und in Figur 9 oben gezeigt) angeordnet, während die Richtungen der Zähne 44 auf beiden Seiten der Symmetrielinie 48 gleich ist (in Figur 8 mit den durch die angeschliffenen Flächen 52 gebildeten Schneidkanten nach links). Wenn man das zweite Element 42b demnach um 180° um die Symmetrielinie 48 dreht, bleibt die gezeigte Konfiguration (Richtung der Zähne 44 und Lage der angeschliffenen Flächen 52) somit erhalten. Dadurch können die zweiten Elemente 42b auch, wenn die Zähne 44 auf einer Seite der Symmetrielinie 48 verschlissen sind, abgebaut, um 180° gedreht um die Symmetrielinie 48 gedreht und wieder montiert werden. Dadurch verdoppelt man die Standzeit der zweiten Elemente 42b. Langlöcher 50 dienen zur Aufnahme der Schrauben 40 und ermöglichen eine gewisse Verschiebung der zweiten Elemente 42b in radialer Richtung der Schneidscheibe 18.

Es sei noch angemerkt, dass man die Zähne 44 alternativ symmetrisch zu einer zweiten (in Figur 8 vertikal eingezeichneten) Symmetrielinie 54 des zweiten Elements 42b anordnen könnte. Dann wären die angeschliffenen Flächen 52 an einer einzigen Fläche des zweiten Elements 42b angeordnet (wären somit nur in Figur 8, nicht in Figur 9 zu sehen - oder umgekehrt) und die Richtungen der Zähne 44 beidseits der Symmetrielinie 48 unterschiedlich. Das zweite Element 42a wäre dann, wenn die Zähne 44 an einem Rand des zweiten Elements 42b verschlissen sind, abzubauen, um beide Symmetrielinien 48 und 54 jeweils um 180° umzudrehen und dann wieder zu montieren.

Während die nicht verzahnten Ränder der ersten Elemente 42a gerade sind, weisen die nicht verzahnten Ränder der zweiten Elemente 42b Einbuchtungen 56 auf. Zudem sind die radialen Abmessungen (d.h. Abstände zwischen den Rändern mit den Zähnen 44) bei den zweiten Elementen 42b größer als bei den ersten Elementen 42a. Die Einbuchtungen 56 bieten Freiraum, in welchen die ersten Elemente 42a aufgenommen werden, wenn die Elemente 42a, 42b an der Halterung 36 montiert sind.

Beide Arten von Elementen 42a, 42b sind (wenn man die Zähne 44 außer Acht lässt) symmetrisch zu beiden Symmetrielinien 48 und 54. Die von der sich in Drehrichtung 46 erstreckenden Symmetrielinie 48 beabstandeten Kanten sind geschärft und dienen als Schneidkanten und formen eine konvexe Kurve, um die Kreisform der Schneidscheibe 18 zu erhalten. Die anderen Kanten sind nicht geschärft und so geformt, dass es möglich ist, alle Elemente 42a, 42b in einer gemeinsamen Ebene der Schneidscheibe 18 anzubringen. Die äußeren Abmessungen der ersten Art von Elementen 42a, in Umfangsrichtung gemessen, sind kleiner als jene der zweiten Art der Elemente 42b.

Anhand der Figur 10 ist erkennbar, dass das zweite Element 42b im Bereich der Zähne 44 auf der Seite mit den angeschliffenen Flächen 52 eine größere Materialstärke als im Bereich dazwischen aufweisen kann.

Nach alledem ist erkennbar, dass die ersten und zweiten Elemente 42a, 42b an ihren beidseits einer Symmetrielinie 48 liegenden Rändern mit Reihen von Zähnen 44 versehen sind, von denen nur jeweils eine Reihe außen liegt und mit dem Erntegut zusammenwirkt, während die andere Reihe inaktiv ist. Die ersten und zweiten Elemente 42a, 42b können somit von der Halterung 36 abgebaut und umgedreht werden, wenn die erste Reihe der Zähne verschlissen ist, sodass dann die zweiten Reihen von Zähnen 44 mit dem Erntegut zusammenwirkt. Diese Vorgehensweise wird durch die alternierende Anbringung der ersten und zweiten Elemente 42a, 42b und die Einbuchtungen 56 der zweiten Elemente 42b ermöglicht, in denen die in radialer Richtung kürzeren ersten Elemente 42a aufgenommen werden.

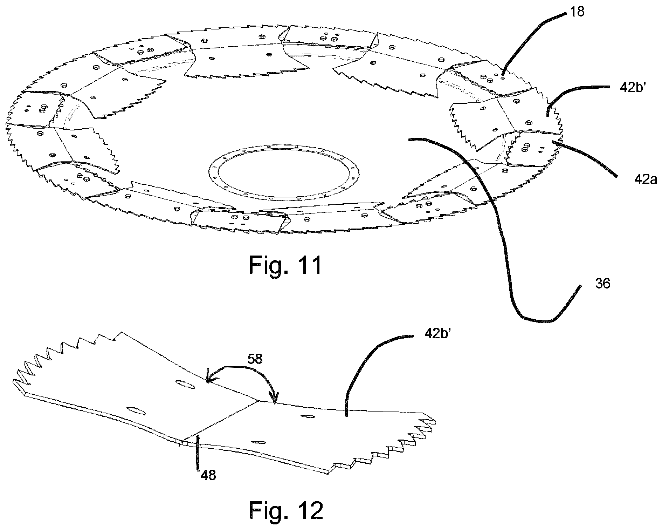

Bei der zweiten Ausführungsform nach Figur 11 und 12 sind die zweiten Elemente 42b' an der Symmetrielinie 48 um einen Winkel 58 relativ zueinander abgeknickt, sodass die nicht aktive Seite sich an der gewölbten Innenseite der Halterung 36 nach oben erstreckt. Die ersten Elemente 42a entsprechen der ersten Ausführungsform.

## Patentansprüche

1. Schneidscheibe (18) für eine Maschine (10) zur Ernte stängelartiger Pflanzen, umfassend eine Anzahl an Elementen (42a, 42b; 42b'), die gemeinsam einen Kreisring mit einer äußeren Schneidkante bildend an einer Halterung (36) anbringbar oder angebracht sind, **dadurch gekennzeichnet, dass** wenigstens eines der Elemente (42a, 42b; 42b') in einer ersten Position, in der ein erster Rand des Elements (42a, 42b; 42b') die äußere Schneidkante bildet, und in einer zweiten Position, in der ein zweiter Rand des Elements (42a, 42b; 42b') die äußere Schneidkante bildet, an der Halterung (36) anbringbar ist, dass zwei Arten von Elementen (42a, 42b; 42b') altemierend an der Halterung (36) anbringbar sind und dass eine erste Art von Elementen (42a) eine kleinere radiale Abmessung als eine zweite Art von Elementen (42b;42b') aufweist und zumindest teilweise in einer Einbuchtung (56) des Elements (42b; 42b') der zweiten Art angeordnet ist..

2. Schneidscheibe (18) nach Anspruch 1, wobei die Schneidkante der Elemente (42a, 42b; 42b') durch Zähne (44) gebildet ist.

3. Schneidscheibe (18) nach Anspruch 1 oder 2, wobei das zumindest eine der Elemente (42a, 42b; 42b') um eine Symmetrielinie (48, 54) um 180° zwischen der ersten und zweiten Position drehbar ist.

4. Schneidscheibe (18) nach Anspruch 3, wobei die Symmetrielinie (48, 54) parallel zum mit der Schneidkante versehenen Rand des Elements (42a, 42b; 42b') und optional senkrecht dazu verläuft.

5. Schneidscheibe (18) nach einem der Ansprüche 1 bis 4, wobei die Elemente (42a, 42b; 42b') in sich flach oder in sich abgewinkelt sind.

6. Schneidscheibe (18) nach einem der Ansprüche 1 bis 5, wobei die erste Art von Elementen (42a) im Umfangsrichtung eine kleinere Abmessung als die zweite Art von Elementen (42b;42b') aufweist.

7. Maschine (10) zur Ernte stängelartiger Pflanzen, die eine oder mehrere Mäh- und Einzugseinrichtungen (14) aufweist, die jeweils eine untere Schneidscheibe (18) nach einem der vorhergehenden Ansprüche und darüber angeordnete Förderelemente (20) mit Aussparungen (22) zur Aufnahme von Pflanzen umfasst.

## Claims

1. Cutting disc (18) for a machine (10) for harvesting stalk-like plants, comprising a number of elements (42a, 42b; 42b') which, together forming a circular ring with an outer cutting edge, can be attached or are attached to a holder (36), **characterized in that** at least one of the elements (42a, 42b; 42b') in a first position, in which a first border of the element (42a, 42b; 42b') forms the outer cutting edge, and in a second position, in which a second border of the element (42a, 42b; 42b') forms the outer cutting edge, can be attached to the holder (36), **in that** two types of elements (42a, 42b; 42b') can be alternately attached to the holder (36), and **in that** a first type of elements (42a) has a smaller radial dimension than a second type of elements (42b; 42b') and is at least partially arranged in an indentation (56) of the element (42b; 42b') of the second type.

2. Cutting disc (18) according to Claim 1, wherein the cutting edge of the elements (42a, 42b; 42b') is formed by teeth (44).

3. Cutting disc (18) according to Claim 1 or 2, wherein at least one of the elements (42a, 42b; 42b') is rotatable about a line of symmetry (48, 54) by 180° between the first and second position.

4. Cutting disc (18) according to Claim 3, wherein the line of symmetry (48, 54) runs parallel to the border, provided with the cutting edge, of the element (42a, 42b; 42b') and optionally perpendicular thereto.

5. Cutting disc (18) according to any one of Claims 1 to 4, wherein the elements (42a, 42b; 42b') are flat per se or angled per se.

6. Cutting disc (18) according to any one of Claims 1 to 5, wherein the first type of elements (42a) has a smaller dimension in the circumferential direction than the second type of elements (42b; 42b').

7. Machine (10) for harvesting stalk-like plants, which has one or more mowing and gathering devices (14), each comprising a lower cutting disc (18) according to any one of the preceding claims and conveyor elements (20) arranged thereabove with recesses (22) for receiving plants.

## Revendications

1. Disque de coupe (18) pour une machine (10) pour la récolte de plantes en forme de tiges, comprenant un certain nombre d'éléments (42a, 42b ; 42b'), qui peuvent être installés ou sont installés sur une fixation (36) tout en formant ensemble un anneau circulaire avec un bord de coupe extérieur, **caractérisé en ce qu'**au moins un des éléments (42a, 42b ; 42b') peut être installé sur la fixation (36) dans une première position, dans laquelle un premier bord de l'élément (42a, 42b ; 42b') forme le bord de coupe extérieur, et dans une deuxième position, dans laquelle un deuxième bord de l'élément (42a, 42b ; 42b') forme le bord de coupe extérieur, que deux types d'éléments (42a, 42b ; 42b') peuvent être installés alternativement sur la fixation (36), et qu'un premier type d'éléments (42a) présente une dimension radiale plus petite qu'un deuxième type d'éléments (42b ; 42b') et est disposé au moins en partie dans une indentation (56) de l'élément (42b ; 42b') du deuxième type.

2. Disque de coupe (18) selon la revendication 1, le bord de coupe des éléments (42a, 42b ; 42b') étant formé par des dents (44).

3. Disque de coupe (18) selon la revendication 1 ou 2, l'au moins un des éléments (42a, 42b ; 42b') pouvant être tourné autour d'une ligne de symétrie (48, 54) de 180° entre la première et la deuxième position.

4. Disque de coupe (18) selon la revendication 3, la ligne de symétrie (48, 54) s'étendant parallèlement au bord de l'élément (42a, 42b ; 42b') muni du bord de coupe et en option perpendiculairement à celui-ci.

5. Disque de coupe (18) selon l'une des revendications 1 à 4, les éléments (42a, 42b ; 42b') étant plats ou coudés sur eux-mêmes.

6. Disque de découpe (18) selon l'une des revendications 1 à 5, le premier type d'éléments (42a) présentant dans la direction périphérique une dimension plus petite que le deuxième type d'éléments (42b ; 42b').

7. Machine (10) pour la récolte de plantes en forme de tiges, qui comporte un ou plusieurs dispositifs de fauchage et d'alimentation (14), qui comprennent chacun un disque de coupe inférieur (18) selon l'une des revendications précédentes et des éléments de convoyage (20) disposés au-dessus avec des évidements (22) pour recevoir des plantes.
